# EUROPEAN PATENT APPLICATION

(11) **EP 3 995 943 A1**
(43) Date of publication of application: **11.05.2022**
(21) Application number: 21176671.2
(22) Date of filing: 28.05.2021
(51) Int. Cl.: G06F 3/0485, G06F 3/0482, G06F 3/0481, G06F 3/0488

(54) **METHOD FOR OPERATING A DISPLAY DEVICE, TERMINAL, AND STORAGE MEDIUM**

(30) Priority: 09.11.2020 CN 202011241098
(71) Applicant: Beijing Xiaomi Mobile Software Co., Ltd., Beijing 100085 (CN)
(72) Inventor: YU, Peiyun, Beijing, 100085 (CN)
(74) Representative: dompatent von Kreisler Selting Werner - Partnerschaft von Patent- und Rechtsanwälten mbB

(57) **Abstract**

A method for operating a display device. A position of page information on a display interface is detected, and when the page information is at the position on the display interface which meets a preset condition, extended page information of the page information is displayed on the display interface. The extended page information at least includes: some or all of display contents which are not displayed in the page information and displayed in page detail information.

## Description

### TECHNICAL FIELD

The disclosure relates to the field of information technologies, and more particularly, to a method for operating a display device and a device for information display, a terminal, and a storage medium.

### BACKGROUND

With the development of Internet of Things and mobile communication technology, mobile terminal devices have been popularized rapidly. Meanwhile, the mobile terminal devices tend to be miniaturized and integrated. This also results in a limited screen area for mobile terminals. The limited screen area can display limited information contents at the same time.

### SUMMARY

The disclosure provides a method for operating a display device, a terminal, and a storage medium.

According to a first aspect of the present invention, there is provided a method for operating a display device, which includes: detecting a position of page information on a display interface; and when the position of the page information meets a preset condition, displaying extended page information of the page information on the display interface, in which the extended page information includes: at least some of display contents which are not displayed in the page information and displayed in page detail information, and the page detail information includes all information of the page information on the display interface.

Optionally, the position of the page information meets the preset condition, including:
the page information sliding to a preset position of the display interface in response to a first operation.

Optionally, the preset position includes: a preset base line position and/or a preset display area.

Optionally, the operation that the extended page information of the page information is displayed on the display interface includes:
when a residence time of the page information at the preset position is greater than a preset value, the extended page information of the page information is displayed at the preset position.

Optionally, the method includes:
in response to existence of the extended page information, the extended page information of the page information is displayed on the display interface when the position of the page information meets the preset condition.

Optionally, the method further includes:
displaying the page detail information of the page information on the display interface in response to a second operation.

Optionally, the method further includes:
returning to the page information from the page detail information in response to a third operation.

Optionally, the method further includes:
outputting, according to current display information, a sound prompt corresponding to the current display information, the display information comprising the page information, the extended page information and the page detail information.

Optionally, the method further includes:
when displaying the extended page information, refreshing the page information or the page detail information corresponding to an extended display page.

Optionally, the method further includes:
when displaying the page information, pre-loading the extended page information.

Optionally, the method further includes:
when positions of more than one piece of page information meet the preset condition, displaying extended page information corresponding to the more than one piece of page information simultaneously.

Optionally, before the extended page information of the page information is displayed on the display interface, the method further includes:
acquiring the extended page information of the page information from a local network or an external network.

Optionally, the method further includes:
adjusting a number of the more than one piece of extended page information displayed simultaneously according to a space size of the preset position and display sizes of the more than one piece of the extended page information.

According to a second aspect of the present invention, there is provided a terminal, which includes: a processor and a memory storing a computer program executable by the processor, in which the processor is configured to, when executing the computer program, perform the steps of the method in the first aspect of the embodiments.

According to a third aspect of the present invention, there is provided a computer-readable storage medium. The computer-readable storage medium stores a computer program which, when executed by a processor, implement the steps of the method in the first aspect of the embodiments.

The technical solutions provided by the embodiments of the disclosure may include the following beneficial effects.

According to the method for operating a display device provided by the embodiments of the disclosure, a position of page information on a display interface is detected, and when the page information is at the position on the display interface which meets a preset condition, extended page information is displayed (the position on the display interface meeting the preset condition may be set in advance). The extended page information at least includes: some or all of display contents which are not displayed in the page information and displayed in page detail information. Since the extended page information at least includes some of the contents displayed in the page detail information, some of the contents in the page detail information may be displayed on the display interface by determining the position of the page information on the display interface in a limited display area (that is, the position of the page information on the display interface meets the preset condition), so that the contents which are not displayed in the page information but displayed in the page detail information may be displayed without entering the page detail information. Therefore, the frequency of entering the page detail information through operation is reduced, and the information acquisition efficiency is improved.

It is to be understood that the above general descriptions and detailed descriptions below are explanatory and not intended to limit the disclosure.

### BRIEF DESCRIPTION OF THE DRAWINGS

The accompanying drawings, which are incorporated in and constitute a part of this specification, illustrate embodiments consistent with the disclosure and, together with the specification, serve to explain the principles of the disclosure.
FIG. 1 is a flowchart showing a method for operating a display device, according to an embodiment.
FIG. 2 is a first schematic diagram illustrating an information display interface, according to an embodiment.
FIG. 3 is a second schematic diagram illustrating an information display interface, according to an embodiment.
FIG. 4 is a third schematic diagram illustrating an information display interface, according to an embodiment.
FIG. 5 is a schematic structural diagram illustrating a device for information display, according to an embodiment.
FIG. 6 is a block diagram illustrating a terminal device, according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of examples do not represent all implementations consistent with the disclosure. Instead, they are merely examples of devices and methods consistent with aspects related to the disclosure as recited in the appended claims.

With the development of Internet of Things and mobile communication technology, mobile terminal devices have been popularized rapidly. Meanwhile, the mobile terminal devices tend to be miniaturized and integrated. This also results in a limited screen area for mobile terminals. The limited screen area can display limited information contents at the same time. this is disadvantageous for acquiring more information contents rapidly. Therefore, how to efficiently acquire information on a limited-size screen becomes a problem affecting user experience.

Most screen interfaces now use lists and cards to display different information modules. Both arrangements have advantages and disadvantages. For a list or card view, in addition to primary information, there is limited presentation capability and inefficient presentation efficiency of secondary information. Partial information needs to be checked by clicking into the page detail information, and interaction cost is high. If a single module in the current display screen needs to display more information, the number of displayed items is much less. While this may result in more information for a single module, there is no expectation of information outside the current display screen.

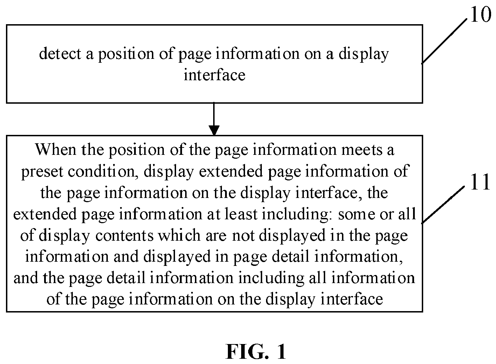

The disclosure provides a method for operating a display device. FIG. 1 is a flowchart showing a method for operating a display device, according to an example. As shown in FIG. 1, the method for operating a display device includes the following steps.

In step 10, a position of page information on a display interface is detected.

In step 11, when the position of the page information meets a preset condition, extended page information of the page information is displayed on the display interface. The extended page information at least includes: some or all of display contents which are not displayed in the page information and displayed in page detail information, and the page detail information includes all information of the page information on the display interface.

In some examples, the extended page information may be a display page between page information and page detail information. In the display interface, the information content displayed by the page detail information is more than the information content displayed by the page information. The page detail information may be a detail page of the page information.

In summary, the page information is an upper-level page of the page detail information. The extended page information is a transition page at an intermediate level between the page information and the page detail information.

For example, if the level of the page information is 1 and the level of the page detail information is 2, the level of the extended page information may be determined as 1.5, or when all contents of the page detail information conform to the contents of the extended page information, the extended page information is equivalent to the page detail information.

For example, the page information may be an information field or information module, or a card containing an information field or information module, a card including an application, a profile card for an item, or a promotional card for an organization, etc. The extended page information may be a card of semi-unfolded page detail information corresponding to the page information. The extended page information contains some or all of display contents which are not displayed in the page information and displayed in the page detail information. The page detail information may contain all information of the page information on the display interface. When the page information is displayed, only a portion of the information is displayed. When the page detail information is displayed, all the information of the page information may be displayed. When the extended page information is displayed, contents in the page information and some or all of display contents which are not displayed in the page information and displayed in the page detail information may be displayed. The page detail information may also be a card in which all the information corresponding to the page information is completely unfolded, and may contain information fields or information modules and the like in the page information.

In some examples, single page detail information occupies a larger screen area than a single page information area. The screen area occupied by the single extended page information may be between the single page information and the single page detail information. The information content displayed by the page detail information may include the information content displayed by the corresponding page information and the information content displayed by the corresponding extended page information. The information content displayed by the extended page information may include the information content displayed by the corresponding page information.

In some examples, the extended page information displays the display content of page information and some or all of the contents which are not displayed in the page information but displayed in the page detail information.

For example, various types of information displays may be provided through an APP for viewing by a user, each type of information display may be provided in the form of a card on the APP, and a page corresponding to the card may be set as a multi-level page. For example, level-1 pages and level-2 pages may be included. Meanwhile, in the disclosure, in order to give consideration to display efficiency and interaction cost, some level-1 pages or level-2 pages may be added with corresponding level-1.5 pages.

The level-1 pages correspond to the page information in the disclosure, the level-1.5 pages correspond to the extended page information in the disclosure, and the level-2 pages correspond to the page detail information in the disclosure.

For example, all the information corresponding to the page information on the display interface is information 1, information 2, information 3, and information 4. The information content displayed when the page information is displayed includes information 1. The information content displayed when the corresponding extended page information is displayed may be information 1, information 2 and information 3. The information content displayed when the page detail information is displayed may be information 1, information 2, information 3, information 4, etc.

It should be noted that each card is used to present different types of information. If the level-2 pages are the last-level pages of the card, all the information under the card that is preset by an APP developer and presented to a user may be included. That is, the page detail information contains all information of the page information on the display interface.

In contrast, the level-1.5 pages may present more information than the level-1 pages and less than the level-2 pages. In some cases, however, some cards do not need to present so much information to the user, the display page does not occupy too much screen space, and by only designing two levels of pages according to the actual situation, the requirements of the user can be met. In this case, the level-1.5 pages may not be presented, and the level-2 pages may be presented directly. At this time, the level-2 pages of the card are equivalent to the level-1.5 pages. That is, the information content displayed when the corresponding extended page information is displayed at this time is the same as the content displayed by the page detail information, and is information 1, information 2, information 3, and information 4, respectively.

In some examples, a position of page information on a display interface is detected, and when the page information is at the position on the display interface which meets a preset condition, extended page information is displayed (the position on the display interface meeting the preset condition may be set in advance). The extended page information at least includes: some or all of display contents which are not displayed in the page information and displayed in page detail information. Since the extended page information at least includes some of the contents displayed in the page detail information, some of the contents in the page detail information may be displayed on the display interface by determining the position of the page information on the display interface in a limited display area (that is, the position of the page information on the display interface meets the preset condition), so that the contents which are not displayed in the page information but displayed in the page detail information may be displayed without entering the page detail information. Therefore, the frequency of entering the page detail information through an operation is reduced, and the information acquisition efficiency is improved.

In some examples, the position of the page information meets the preset condition, including: the page information is slid to a preset position of the display interface in response to a first operation.

In some examples, the first operation may be a sliding operation, and the extended page information is displayed by sliding the page information such that the page information is at a preset position of the display interface.

In some examples, when the first operation is a sliding operation, the extended page information is displayed during the sliding operation. After the sliding operation is finished, the display page is restored to the display of the page information.

In some examples, the preset position includes: a preset base line position and/or a preset display area.

In some examples, the preset position may include a preset base line position and/or a preset display area. For example, a virtual base line (or a preset display area) may be arranged in the middle of the display interface, and when the position of the page information covers the virtual base line, the extended page information is displayed.

In some examples, the operation that the extended page information of the page information is displayed on the display interface includes that, when a residence time of the page information at the preset position is greater than a preset value, the extended page information of the page information is displayed at the preset position.

In some examples, the preset value may be a time threshold set within a system. After the first operation of touching the page information at the preset position, the residence time of the page information at the preset position is compared with the preset value. When the residence time is greater than the preset value, the extended page information is displayed at the preset position. When the residence time is less than the preset value, the page information is displayed at the preset position. Therefore, when performing the first operation of touching the page information, rapid sliding may be carried out without displaying the extended page information, so that the display page is prevented from being displayed in the form of the extended page information, and therefore the operation of closing the extended page information is reduced, and the user experience and improved.

In some examples, the method includes that, if extended page information exists, the extended page information of the page information is displayed on the display interface when the position of the page information meets the preset condition.

In some examples, not all display pages have extended page information. Therefore, before the extended page information of the page information is displayed on the display interface, whether the page information has the extended page information or not is detected. When the extended page information is provided, the extended page information of the page information is displayed on the display interface after the position of the page information meets the preset condition.

In some examples, the operation that whether the page information has the extended page information or not is detected includes that, in response to a first operation, before the page information slides to the preset position of the display interface, whether the page information has the extended page information or not is detected, or whether the page information has the extended page information or not is detected after the position of the page information meets the preset condition.

In some examples, the method further includes: the page detail information of the page information is displayed on the display interface in response to a second operation.

In some examples, the second operation may be a click operation on a touch screen supporting the display interface or a touch operation on a display control supporting the page information or the extended page information. When the click operation is performed on the page information, page detail information connected with a control corresponding to the touch screen position touched through the click operation is displayed.

In some examples, the method further includes returning to the page information from the page detail information in response to a third operation.

In some examples, when the page detail information is displayed on the display interface, the third operation may be performed on the page detail information on the display interface to return to the page information from the page detail information. The third operation may be any one of a click operation, a press operation, and a slide operation on the page detail information.

In some examples, the method further includes that, according to current display information, a sound prompt corresponding to the current display information is output, the display information including the page information, the extended page information and the page detail information.

In some examples, the sound prompt includes ring tones and/or background music, etc. For example, when the page information is currently displayed on the display interface, the background music correspondingly played may be a ballad-style music. When the extended page information is displayed currently, the background music played correspondingly may be a popular-style music. When the page detail information is displayed currently, the background music played correspondingly may be a classical-style music, etc.

In some examples, the method further includes that, when the extended page information is displayed, the page information or the page detail information corresponding to an extended display page is refreshed.

In some examples, when the extended page information is displayed, the page information or the page detail information corresponding to the extended page information may be refreshed synchronously, so that when the extended page information exits, the extended page information is displayed again through the page information or the page detail information is displayed, the refreshed latest information may be displayed in time, and the delay time for acquiring the latest information is reduced.

In some examples, the method further includes that, when the page information is displayed, the extended page information is pre-loaded.

In some examples, when the page information is displayed, the extended page information is pre-loaded, so that the extended page information may be conveniently displayed in time after the first operation of touching the page information. The loading mode may be to acquire the extended page information locally or acquire remote extended page information through a network request.

In some examples, the method further includes that, when the positions of more than one piece of page information meet the preset condition, more than one piece of extended page information are displayed simultaneously, each of the more than one piece of extended page information corresponding to a respective one of the more than one piece of page information.

In some examples, when the positions of the more than one piece of page information are all at the preset position, the preset condition is met, and more than one piece of extended page information may be displayed simultaneously, each of the more than one piece of extended page information corresponding to a respective one of the more than one piece of page information. For example, the area of the preset position is large enough, the more than one piece of page information are transversely arranged at the preset position in parallel or the more than one piece of page information are longitudinally arranged at the preset position in parallel through the first operation, and at this time, the more than one piece of extended page information may be simultaneously displayed at the preset position, each of the more than one piece of extended page information corresponding to a respective one of the more than one piece of page information.

In some examples, before the extended page information of the page information is displayed on the display interface, the method further includes that, the extended page information of the page information is acquired from a local network or an external network.

In some examples, when the extended page information corresponding to the page information is pre-stored locally, the extended page information pre-stored locally may be preferentially acquired. When there is no extended page information pre-stored locally or the stored extended page information does not meet the display requirement, the extended page information linked in an external network may be acquired through a network request. The extended page information does not meet the display requirement, including the situation that the information expression of the extended page information is unclear and inaccurate, so that the extended page information cannot be accurately understood, etc.

In some examples, the method further includes that, a number of the more than one piece of extended page information displayed simultaneously is adjusted according to a space size of the preset position and a display sizes of the more than one piece of extended page information.

In some examples, the area of the preset position is large enough to simultaneously accommodate more than one piece of extended page information for display, and the more than one piece of extended page information, each corresponding to a respective one of the more than one piece of page information, may be displayed simultaneously at the preset position.

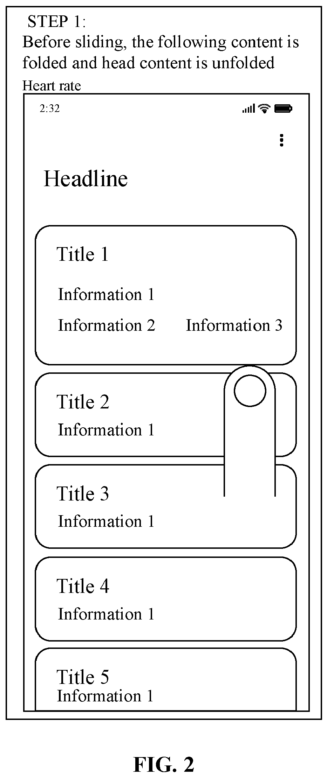

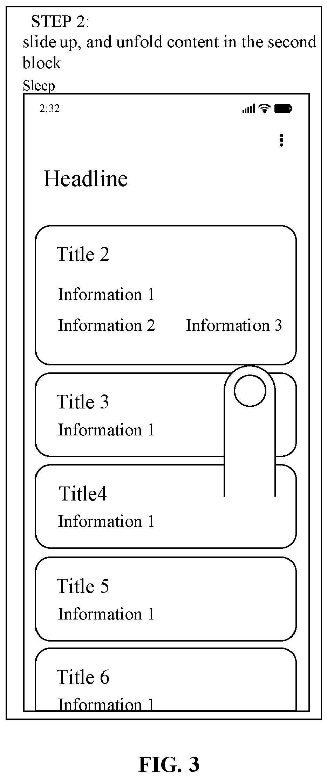

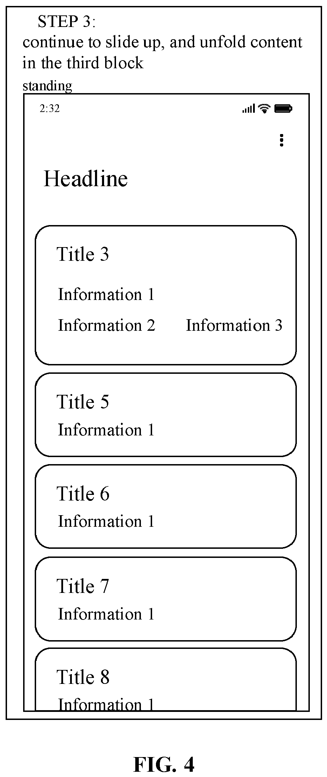

FIG. 2 is a first schematic diagram illustrating an information display interface, according to an example. FIG. 3 is a second schematic diagram illustrating an information display interface, according to an example. FIG. 4 is a third schematic diagram illustrating an information display interface, according to an example. As shown in FIGS. 2-4, when a list is slid to the top, middle, or bottom of an interface, the list contents are automatically unfolded to present extended page information. The interface presents only one piece of extended page information each time.

The list or the cards in the list are displayed as page information on the first page. The information of the page information belongs to primary information, which is at a general information level that is simple and has a small amount of information, for example, title 4, title 5, etc. in FIGS. 2-4. After the list or the cards in the list are clicked, it is jumped to the page detail information corresponding to the list or the cards. The contents of the page detail information belong to secondary information, which is at a general secondary information level that is complicated and has a large amount of information. The extended page information is between the page information and the page detail information. The secondary information for a general module is displayed as the extended page information (level-1.5 display page).

The switching of the page information to the level-1.5 display page is automatically displayed by sliding to the position of the interface. As shown in Fig. 2, title 1 corresponds to heart rate information and is displayed on the level-1.5 display page. At this time, the contents displayed on the level-1.5 display page of title 1 include information 1, information 2 and information 3. By sliding up, as shown in Fig. 3, the information of title 2 is unfolded, and title 2 corresponds to sleep information. At this time, the contents displayed on the level-1.5 display page of title 2 include information 1, information 2 and information 3. The contents of title 1 include information 1, information 2 and information 3, which are folded by sliding up. By continuing to slide up, as shown in Fig. 4, the information of title 3 is unfolded, and title 3 corresponds to standing information. At this time, the contents displayed on the level-1.5 display page of title 3 include information 1, information 2 and information 3. The information of title 2 is folded by sliding up. If sliding down, the information of title 3 is folded and the information of title 2 is unfolded. During the sliding process, information positioning may be carried out based on the speed and distance of sliding. For example, if the distance of one slide is long or the speed of one slide is high, the number of items in the list that are slid correspondingly will be large.

If the information of the page detail information is to be browsed or operated, the page detail information may be directly accessed by clicking on a list or a card.

In some examples, the method further includes that, a currently detected touch operation acting on the page information is determined as a first operation or a second operation according to a touch parameter, the touch parameter including a touch position, a touch track length and/or a touch point number.

When the touch parameter is the touch position, the operation that the currently detected touch operation acting on the page information is determined as the first operation or the second operation according to the touch parameter includes that, when a first position of a touch screen is touched, the currently detected touch operation acting on the page information is determined as the first operation.

The operation further includes that, when a second position of the touch screen is touched, the currently detected touch operation acting on the page information is determined as the second operation. The first position and the second position are two different display positions of the touch screen. For example, the first position is the top of the touch screen and the second position is the bottom of the touch screen.

When the touch parameter is the touch track length, the operation that the currently detected touch operation acting on the page information is determined as the first operation or the second operation according to the touch parameter includes that, when the touch track length meets a first preset track length, the currently detected touch operation acting on the page information is determined as the first operation; and when the touch track length meets a second preset track length, the currently detected touch operation acting on the page information is determined as the second operation. The second preset track length is greater than the first preset track length. That is, when the touch track length is greater than the first preset track length and smaller than the second preset track length, the touch operation is determined as the first operation; and when the touch track length is greater than the second preset track length, the touch operation is determined as the second operation.

When the touch parameter is the touch point number, the operation that the currently detected touch operation acting on the page information is determined as the first operation or the second operation according to the touch parameter includes that, when the touch point number meets a first preset point number, the currently detected touch operation acting on the page information is determined as the first operation; and when the touch point number meets a second preset point number, the currently detected touch operation acting on the page information is determined as the second operation. The second preset point number is greater than the first preset point number. That is, when the touch point number is greater than the first preset point number and smaller than the second preset point number, the touch operation is determined as the first operation; and when the touch point number is greater than the second preset point number, the touch operation is determined as the second operation.

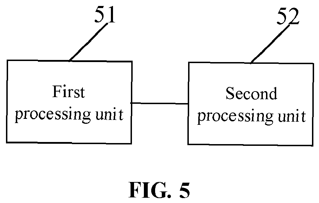

The disclosure further provides a device for information display. FIG. 5 is a schematic structural diagram illustrating a device for information display, according to an example. As shown in FIG. 5, the device for information display includes a first processing unit 51 and a second processing unit 52.

The first processing unit 51 is configured to detect a position of page information on a display interface.

The second processing unit 52 is configured to display, when the position of the page information meets a preset condition, extended page information of the page information on the display interface.

The extended page information at least includes: some or all of display contents which are not displayed in the page information and displayed in page detail information, and the page detail information includes all information of the page information on the display interface.

In some examples, the extended page information may be a display page between page information and page detail information. In the display interface, the information content displayed by the page detail information is more than the information content displayed by the page information. The page detail information may be a detail page of the page information.

In summary, the page information is an upper-level page of the page detail information. The extended page information is a transition page located at an intermediate level between the page information and the page detail information.

For example, if the level of the page information is 1 and the level of the page detail information is 2, the level of the extended page information may be determined as 1.5, or when all contents of the page detail information conform to the contents of the extended page information, the extended page information is equivalent to the page detail information.

For example, the page information may be an information field or information module, or a card containing an information field or information module, a card including an application, a profile card for an item, or a promotional card for an organization, etc. The extended page information may be a card of semi-unfolded page detail information corresponding to the page information. The extended page information includes some or all of display contents which are not displayed in the page information and displayed in the page detail information. The page detail information may include all information of the page information on the display interface. When the page information is displayed, only a portion of the information is displayed. When the page detail information is displayed, all the information of the page information may be displayed. When the extended page information is displayed, contents in the page information and some or all of display contents which are not displayed in the page information and displayed in the page detail information may be displayed. The page detail information may also be a card in which all the information corresponding to the page information is completely unfolded, and may include information fields or information modules and the like in the page information.

In some examples, single page detail information occupies a larger screen area than a single page information area. The screen area occupied by the single extended page information may be between the single page information and the single page detail information. The information content displayed by the page detail information may include the information content displayed by the corresponding page information and the information content displayed by the corresponding extended page information. The information content displayed by the extended page information may include the information content displayed by the corresponding page information.

In some examples, the extended page information displays the display content of page information and some of the contents which are not displayed in the page information but displayed in the page detail information.

For example, various types of information displays may be provided through an APP for viewing by a user, each type of information display may be provided in the form of a card on the APP, and a page corresponding to the card may be set as a multi-level page. For example, level-1 pages and level-2 pages may be included. Meanwhile, in the disclosure, in order to give consideration to display efficiency and interaction cost, corresponding level-1.5 pages are added to some level-1 pages or level-2 pages.

The level-1 pages correspond to the page information in the disclosure, the level-1.5 pages correspond to the extended page information in the disclosure, and the level-2 pages correspond to the page detail information in the disclosure.

For example, all the information corresponding to the page information on the display interface is information 1, information 2, information 3, and information 4. The information content displayed when the page information is displayed includes information 1. The information content displayed when the corresponding extended page information is displayed may be information 1, information 2 and information 3. The information content displayed when the page detail information is displayed may be information 1, information 2, information 3, information 4, etc.

It is to be noted that each card is used to present different types of information. If the level-2 pages are the last-level pages of the card, all the information under the card that is preset by an APP developer and presented to a user may be included. That is, the page detail information includes all information of the page information on the display interface.

In contrast, the level-1.5 pages may present more information than the level-1 pages and less than the level-2 pages. In some cases, however, some cards do not need to present so much information to the user, the display page does not occupy too much screen space, and by only designing two levels of pages according to the actual situation, the requirements of the user can be met. In this case, the level-1.5 pages may not be presented, and the level-2 pages may be presented directly. At this time, the level-2 pages of the card are equivalent to the level-1.5 pages. That is, the information content displayed when the corresponding extended page information is displayed at this time is the same as the content displayed by the page detail information, and is information 1, information 2, information 3, and information 4, respectively.

In some examples, a position of page information on a display interface is detected, and when the page information is at the position on the display interface which meets a preset condition, extended page information is displayed (the position on the display interface meeting the preset condition may be set in advance). The extended page information at least includes: some or all of display contents which are not displayed in the page information and displayed in page detail information. Since the extended page information at least includes some of the contents displayed in the page detail information, some of the contents in the page detail information may be displayed on the display interface by determining the position of the page information on the display interface in a limited display area (that is, the position of the page information on the display interface meets the preset condition), so that the contents which are not displayed in the page information but displayed in the page detail information may be displayed without entering the page detail information. Therefore, the frequency of entering the page detail information through operation is reduced, and the information acquisition efficiency is improved.

In some examples, the position of the page information meets the preset condition, including: the page information is slid to a preset position of the display interface in response to a first operation.

In some examples, the first operation may be a sliding operation, and the extended page information is displayed by sliding the page information such that the page information is at a preset position of the display interface.

In some examples, when the first operation is a sliding operation, the extended page information is displayed during the sliding operation. After the sliding operation is finished, the display page is restored to the display of the page information.

In some examples, the preset position includes: a preset base line position and/or a preset display area.

In some examples, the preset position may include a preset base line position and/or a preset display area. For example, a virtual base line (or a preset display area) may be arranged in the middle of the display interface, and when the position of the page information covers the virtual base line, the extended page information is displayed.

In some examples, the second processing unit is configured to display the extended page information of the page information on the display interface, specifically, the second processing unit is configured to display, when a residence time of the page information at the preset position is greater than a preset value, the extended page information of the page information at the preset position.

In some examples, the preset value may be a time threshold set within a system. After the first operation of touching the page information at the preset position, the residence time of the page information at the preset position is compared with the preset value. When the residence time is greater than the preset value, the extended page information is displayed at the preset position. When the residence time is less than the preset value, the page information is displayed at the preset position. Therefore, when performing the first operation of touching the page information, rapid sliding may be carried out without displaying the extended page information, so that the display page is prevented from being displayed in the form of the extended page information, thereby reducing the operation of closing the extended page information, and improving the user experience.

In some examples, the second processing unit is further configured to display, if extended page information exists, the extended page information of the page information on the display interface when the position of the page information meets the preset condition.

In some examples, not all display pages have extended page information. Therefore, before the extended page information of the page information is displayed on the display interface, whether the page information has the extended page information or not is detected. When the extended page information is provided, the extended page information of the page information is displayed on the display interface after the position of the page information meets the preset condition.

In some examples, the operation that whether the page information has the extended page information or not is detected includes that, in response to a first operation, before the page information is slid to the preset position of the display interface, whether the page information has the extended page information or not is detected, or whether the page information has the extended page information or not is detected after the position of the page information meets the preset condition.

In some examples, the second processing unit is configured to display the page detail information of the page information on the display interface in response to a second operation.

In some examples, the second operation may be a click operation on a touch screen supporting the display interface or a touch operation on a display control supporting the page information or the extended page information. When the click operation is performed on the page information, page detail information connected with a control corresponding to the touch screen position touched by the click operation is displayed.

In some examples, the second processing unit is further configured to display the page information on the display interface in response to a third operation.

In some examples, when the page detail information is displayed on the display interface, the third operation may be performed on the page detail information on the display interface to return to the page information from the page detail information. The third operation may be any one of a click operation, a press operation, and a slide operation on the page detail information.

In some examples, the second processing unit is further configured to output, according to current display information, a sound prompt corresponding to the current display information, the display information including the page information, the extended page information and the page detail information.

In some examples, the sound prompt includes ring tones and/or background music, etc. For example, when the page information is currently displayed on the display interface, the background music correspondingly played may be a ballad-style music. When the extended page information is displayed currently, the background music correspondingly played may be a popular-style music. When the page detail information is displayed currently, the background music correspondingly played may be a classical-style music, etc.

In some examples, the second processing unit is further configured to refresh, when the extended page information is displayed, the page information or the page detail information corresponding to an extended display page.

In some examples, when the extended page information is displayed, the page information or the page detail information corresponding to the extended page information may be refreshed synchronously, so that when the extended page information exits, the extended page information is displayed again through the page information or the page detail information is displayed, the refreshed latest information may be displayed in time, and the delay time for acquiring the latest information is reduced.

In some examples, the second processing unit is further configured to pre-load, when the page information is displayed, the extended page information.

In some examples, when the page information is displayed, the extended page information is pre-loaded, so that the extended page information may be conveniently displayed in time after the first operation touches the page information. The loading mode may be to acquire the extended page information locally or acquire remote extended page information through a network request.

In some examples, the second processing unit is further configured to simultaneously display, when the positions of more than one piece of page information meet the preset condition, more than one piece of extended page information, each corresponding to a respective one of the more than one piece of page information.

In some examples, when the positions of the more than one piece of page information are all at the preset position, the preset condition is met, and the more than one piece of extended page information, each corresponding to a respective one of the more than one piece of page information may be displayed simultaneously. For example, the area of the preset position is large enough, the more than one piece of page information is transversely arranged at the preset position in parallel or the more than one piece of page information is longitudinally arranged at the preset position in parallel through the first operation, and at this time, the more than one piece of extended page information, each corresponding to a respective one of the more than one piece of page information may be simultaneously displayed at the preset position.

In some examples, the second processing unit is further configured to acquire, before displaying the extended page information of the page information on the display interface, the extended page information of the page information from a local network or an external network.

In some examples, when the extended page information corresponding to the page information is pre-stored locally, the extended page information pre-stored locally may be preferentially acquired. When there is no extended page information pre-stored locally or the stored extended page information does not meet the display requirement, the extended page information linked in an external network may be acquired through a network request. The extended page information does not meet the display requirement, including the situation that the information expression of the extended page information is unclear and inaccurate, so that the extended page information cannot be accurately understood, etc.

In some examples, the second processing unit is further configured to adjust the number of the more than one piece of the extended page information displayed simultaneously according to a space size of the preset position and display sizes of the more than one piece of extended page information.

In some examples, the area of the preset position is large enough to simultaneously accommodate more than one piece of extended page information for display, and the extended page information corresponding to the more than one piece of page information may be simultaneously displayed at the preset position.

The disclosure also provides a terminal, which includes: a processor and a memory for storing a computer program executable by the processor. The processor is configured to, when executing the computer program, perform the steps of the method in the above examples.

The disclosure also provides a computer-readable storage medium having a computer program stored thereon. The computer program, when executed by a processor, the implements the steps of the method in the above examples.

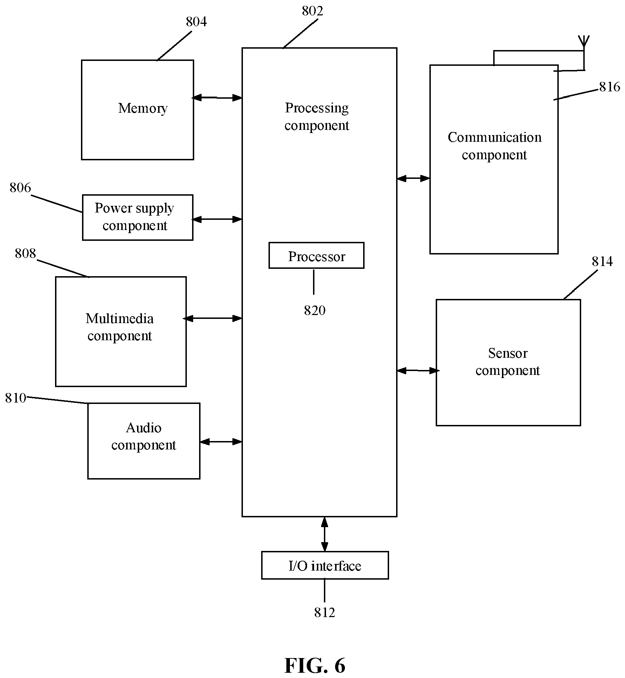

FIG. 6 is a block diagram illustrating a terminal device, according to an example. For example, the terminal device may be a mobile phone, a computer, a digital broadcast terminal, a messaging device, a gaming console, a tablet, a medical device, exercise equipment, a personal digital assistant, and the like.

Referring to FIG. 6, the terminal device may include one or more of the following components: a processing component 802, a memory 804, a power component 806, a multimedia component 808, an audio component 810, an Input/Output (I/O) interface 812, a sensor component 814, and a communication component 816.

The processing component 802 typically controls overall operations of the terminal device, such as operations associated with display, telephone calls, data communications, camera operations, and recording operations. The processing component 802 may include one or more processors 820 for executing instructions to complete all or part of the steps in the described methods. In addition, the processing component 802 may include one or more modules to facilitate interaction between the processing component 802 and other components. For example, the processing component 802 may include a multimedia module to facilitate the interaction between the multimedia component 808 and the processing component 802.

The memory 804 is configured to store various types of data to support the operation of the terminal device. Examples of such data include instructions for any applications or methods operated on the terminal device, contact data, phonebook data, messages, pictures, video, etc. The memory 804 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk.

The power component 806 provides power to various components of the terminal device. The power component 806 may include a power management system, one or more power sources, and any other components associated with the generation, management and distribution of power in the terminal device.

The multimedia component 808 includes a screen providing an output interface between the terminal device and the user. In some examples, the screen may include a Liquid Crystal Display (LCD) and a Touch Panel (TP). If the screen includes the TP, the screen may be implemented as a touch screen to receive input signals from the user. The TP includes one or more touch sensors to sense touches, swipes and gestures on the TP. The touch sensors may not only sense a boundary of a touch or swipe action, but also sense a period of time and a pressure associated with the touch or swipe action. In some examples, the multimedia component 808 includes a front camera and/or a rear camera. The front camera and/or the rear camera may receive an external multimedia datum while the terminal device is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a Microphone (MIC) configured to receive an external audio signal when the terminal device is in an operation mode, such as a call mode, a recording mode, and a voice recognition mode. The received audio signal may be further stored in the memory 804 or transmitted via the communication component 816. In some examples, the audio component 810 further includes a speaker for outputting audio signals.

The I/O interface 812 provides an interface between the processing component 802 and peripheral interface modules, such as a keyboard, a click wheel, or buttons. The buttons may include, but are not limited to, a home button, a volume button, a starting button, and a locking button.

The sensor component 814 includes one or more sensors to provide status assessments of various aspects of the terminal device. For example, the sensor component 814 may detect an open/closed status of the terminal device, and relative positioning of components. For example, the component is the display and the keypad of the terminal device. The sensor component 814 may also detect a change in position of the terminal device or a component of the terminal device, a presence or absence of user contact with the terminal device, an orientation or an acceleration/deceleration of the terminal device, and a change in temperature of the terminal device. The sensor component 814 may include a proximity sensor configured to detect the presence of nearby objects without any physical contact. The sensor component 814 may also include a light sensor, such as a Complementary Metal Oxide Semiconductor (CMOS) or Charge Coupled Device (CCD) image sensor, for use in imaging applications. In some examples, the sensor component 814 may also include an acceleration sensor, a gyroscope sensor, a magnetic sensor, a pressure sensor, or a temperature sensor.

The communication component 816 is configured to facilitate communication, wired or wirelessly, between the terminal device and other devices. The terminal device may access a wireless network based on a communication standard, such as Wi-Fi, 2G or 3G, or a combination of Wi-Fi, 2G and 3G. In one example, the communication component 816 receives a broadcast signal or broadcast associated information from an external broadcast management system via a broadcast channel. In one example, the communication component 816 further includes a Near Field Communication (NFC) module to facilitate short-range communications. For example, the NFC module may be implemented based on a Radio Frequency Identification (RFID) technology, an Infrared Data Association (IrDA) technology, an Ultra-Wideband (UWB) technology, a Bluetooth (BT) technology, and other technologies.

For example, the terminal device may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic elements, for performing the above-described methods.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as exemplary only, with a true scope of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for operating a display device, comprising:
detecting (10) a position of page information on a display interface; and
when the position of the page information meets a preset condition, displaying (11) extended page information of the page information on the display interface,
wherein the extended page information comprises: at least some of display contents which are not displayed in the page information and displayed in page detail information, and
the page detail information includes all information of the page information on the display interface.

2. The method for operating a display device according to claim 1, further comprising:
in a case that the page information is slid to a preset position of the display interface in response to a first operation, determining that the position of the page information meets the preset condition.

3. The method for operating a display device according to claim 2, wherein the preset position comprises at least one of a preset base line position or a preset display area.

4. The method for operating a display device according to claim 3, wherein displaying the extended page information of the page information on the display interface comprises:
when a residence time of the page information at the preset position is greater than a preset value, displaying the extended page information of the page information at the preset position.

5. The method for operating a display device according to claim 1, comprising:
in response to existence of the extended page information, displaying the extended page information of the page information on the display interface when the position of the page information meets the preset condition.

6. The method for operating a display device according to claim 1, further comprising:
displaying the page detail information of the page information on the display interface in response to a second operation.

7. The method for operating a display device according to claim 6, further comprising:
returning to the page information from the page detail information in response to a third operation.

8. The method for operating a display device according to any one of claims 1 to 7, further comprising:
outputting, according to current display information, a sound prompt corresponding to the current display information, the display information comprising the page information, the extended page information and the page detail information.

9. The method for operating a display device according to any one of claims 1 to 7, further comprising:
when displaying the extended page information, refreshing the page information or the page detail information corresponding to an extended display page.

10. The method for operating a display device according to any one of claims 1 to 7, further comprising:
when displaying the page information, pre-loading the extended page information.

11. The method for operating a display device according to any one of claims 1 to 7, further comprising:
when positions of more than one piece of page information meet the preset condition,
displaying more than one piece of extended page information simultaneously, each of the more than one piece of extended page information corresponding to a respective one of the more than one piece of page information.

12. The method for operating a display device according to any one of claims 1 to 7, wherein before displaying the extended page information of the page information on the display interface, the method further comprises:
acquiring the extended page information of the page information from a local network or an external network.

13. The method for operating a display device according to claim 11, further comprising:
adjusting a number of the more than one piece of extended page information displayed simultaneously according to a space size of the preset position and display sizes of the more than one piece of the extended page information.

14. A terminal, comprising: a processor (820) and a memory (804) storing a computer program executable by the processor (820), wherein the processor (820) is configured to, when executing the computer program, perform the steps of the method according to claims 1 to 13.

15. A computer-readable storage medium, storing a computer program which, when executed by a processor, implement the steps of the method according to claims 1 to 13.
